# EUROPEAN PATENT SPECIFICATION

(11) **EP 2 743 574 B1**
(45) Date of publication and mention of the grant of the patent: **10.04.2019**
(21) Application number: 13169338.4
(22) Date of filing: 27.05.2013
(51) Int. Cl.: F21V 15/04, B60Q 1/04

(54) **Lighting apparatus having shock absorption assembly**
Beleuchtungsvorrichtung mit Stoßaufnahmevorrichtungsanordnung
Appareil d'éclairage doté d'un ensemble d'absorption de choc

(30) Priority: 11.12.2012 KR 20120143196
(43) Date of publication of application: 18.06.2014
(73) Proprietor: Vision X Asia Co., Ltd., Incheon-shi 403-030 (KR); Ko, In-hong, Seoul 135-971 (KR)
(72) Inventor: KO, in-Hong, 135-971 SEOUL (KR)
(74) Representative: Betten & Resch

(56) References cited:
- EP-A1- 2 206 628
- AU-A4- 2009 101 168
- KR-B1- 101 079 061
- KR-U- 20100 004 444
- US-A- 4 075 470
- US-A- 5 613 765
- US-A- 5 860 734

## Description

### BACKGROUND OF THE INVENTION

### 1. Field of the Invention

The present invention relates generally to lighting apparatuses having shock absorption assemblies and, more particularly, to a lighting apparatus which is installed on various kinds of equipment or vehicles such as SUVs for frequent rough road driving, vehicles for construction, mining equipment, heavy equipment or vehicles for construction, etc., so as to provide night lighting, and is provided with a shock absorption assembly to protect an LED, a circuit, software and hardware from vibrations generated under a variety of operating conditions, and which is configured such that the assembly process can be facilitated, and the assembled state can be reliably maintained, whereby the productivity can be enhanced, and maintenance and repair work can also be facilitated.

### 2. Description of the Related Art

LEDs for lighting are being substituted for incandescent light bulbs, fluorescent lamps, halogen lamps and even special lamps such as HID lamps, etc.

LEDs for lighting are being spotlighted because of characteristics of being small and light, having low heat generation, being semi-permanent, having high responsivity, and being able to conduct pulse operation and control optical output using a current. Furthermore, techniques associated with control characteristics, heat dissipation and high luminance are developing from day to day.

If there is no force based on government regulations, LEDs will first be substituted for typical lighting apparatuses used in special lighting fields.

Recently, with regard to LED lighting apparatuses, a shock absorption means for protecting hardware and software of the lighting apparatuses from vibration or shock transmitted from an installation target (for example, an SUV) has been required.

Several techniques related to the shock absorption means used in various kinds of lighting apparatuses will be introduced below.

A first example was proposed in Korean Patent Registration No. 10-0381668 (Registration Date: Apr. 11, 2003), entitled [Shock absorption device for lighting lamps].

This introduces a technique for protecting a high-pressure mercury lamp from external shock applied to a casing or the like of the high-pressure mercury lamp.

Another example was proposed in Korean Patent Registration No. 10-0538148 (Registration Date: Dec. 15, 2005), entitled [Lighting apparatus having shock absorption means].

This technique provides a lighting apparatus which is installed on heavy equipment or the like, which is used in a construction site, so as to facilitate night work. The lighting apparatus includes a body which is mounted at a predetermined position to heavy equipment, and a shock absorption means which is provided between the body and a lamp housing to reduce shock applied to the apparatus. The shock absorption means functions to mitigate vibrations transmitted from the heavy equipment, thus extending the lifetime of the lighting apparatus.

A further example was proposed in Korean Utility Model Registration No. 20-0401931 (Registration Date: Nov. 17, 2005), entitled [Lighting apparatus having vibration resistance function].

This technique provides a lighting apparatus having a vibration resistance function which effectively absorbs shaking or vibration transmitted from heavy equipment such as a tower crane and prevents a connection portion such as a neck part of the lighting apparatus from being damaged.

However, the three above-mentioned conventional techniques have a simple structure in which a coil spring or bellows member for shock absorption is provided on a portion of the lighting apparatus that is coupled to an installation target or a socket or the like by which the lighting apparatus is removably coupled to the installation target. Therefore, these techniques can neither provide a shock absorption function interlocked to a light source needed to be adjusted in angle nor a structure to facilitate the assembly of the apparatus and make adjustments in angle of the light source for convenience.

Meanwhile, another conventional technique was proposed in Korean Utility Model Registration No. 20-455630 (Registration Date: Sep. 07, 2011), entitled [Led lighting apparatus for vehicles].

In this technique, a separate mounting plate is provided on a lower portion of a main body casing. A shock absorption member is installed between the main body casing and the mounting plate to mitigate transfer of vibrations from a vehicle to the lighting apparatus. A waterproofing hose and a waterproofing connector are provided on power cables. A movement-allowing depression is formed in each of opposite ends of a rib which is provided on a lower surface of the mounting plate. Upper ends of a mounting bracket are movably disposed in the respective movement-allowing depressions. Thereby, the height of the lower rib can be reduced, thus reducing load resistance.

However, the shock absorption member of this technique is provided in such a way that it is interposed between the mounting plate and each of nuts to mitigate vibrations of the vehicle and, particularly, an O-ring made of a soft synthetic resin to absorb vibrations is used as the shock absorption member. Therefore, this technique has a problem of low compatibility, in other words, it can be applied only to particular fields.

US 5 613 765 A discloses a headlight mounting apparatus for a headlight having a bulb mounted therein. The subject headlight mounting arrangement has a mounting portion integral with the headlight, a retaining mechanism and associated hardware, and a grommet arrangement of unique cross-sectional configuration which alters the frequency of vibration to a value significantly less than the natural frequency of vibration of the headlight bulb filament. This arrangement reduces bulb failures caused by shock experienced during vehicle/machine operation.

### SUMMARY OF THE INVENTION

Accordingly, the present invention has been made keeping in mind the above problems occurring in the prior art, and an object of the present invention is to provide a lighting apparatus which is installed on various kinds of equipment or vehicles such as SUVs for frequent rough road driving, vehicles for construction, mining equipment, heavy equipment or vehicles for construction, etc., so as to provide night lighting, and which is provided with a shock absorption assembly to protect an LED, a circuit, software and hardware from vibrations generated under a variety of operating conditions.

Another object of the present invention is to provide a lighting apparatus in which the shock absorption assembly includes a connector and a shock absorption member and is mounted to the body of the apparatus by a fastening member (a second fastening member) in such a way that the body is fastened to an installation target by a mounting means connected to the connector, whereby the assembly process can be facilitated, the assembled state of the apparatus can be reliably maintained, the productivity can be improved, and maintenance and repair work can also be facilitated.

A further object of the present invention is to provide a lighting apparatus which is configured such that the connector, the shock absorption member and the second fastening member of the shock absorption assembly are easily and reliably assembled with each other with specific orientation, and in which a light source can be easily adjusted in angle.

Yet another object of the present invention is to provide a lighting apparatus which further includes an angle indication means for facilitating the adjustment in angle of the light source and, particularly, is configured such that the angle-adjusted state can be reliably maintained despite severe vibration generated under a variety of operating conditions given the fact that the lighting apparatus is used for equipment or vehicles such as SUVs for frequent rough road driving, vehicles for construction, mining equipment, heavy equipment or vehicles for construction, etc., so as to provide night lighting.

The present invention is defined in independent claim 1. The dependent claims define embodiments of the present invention.

A lighting apparatus, includes : a body having a first mounting part, a second mounting part, a first coupling part and a second coupling part; a light source unit provided on the first mounting part of the body; a shock absorption assembly disposed on each of the second mounting parts provided on respective opposite ends of the body; a first fastening member coupled to the first coupling part of the body to fasten the light source unit to the body; a second fastening member coupled to each of the second coupling part of the body to fasten the corresponding shock absorption assembly to the body; and a mounting means for fastening the body to an installation target, wherein the shock absorption assembly includes a connector having a fastening part, and a shock absorption member interposed between the connector and the second fastening member.

In the shock absorption assembly, the connector may have a first flange for removal prevention. The first flange may be provided around the fastening part, and the shock absorption member may include: an insert part covering an exposure surface of the connector and having a through hole corresponding to the fastening part of the connector; and a second flange provided around the insert part, the second flange receiving the first flange therein. The second fastening member may have: an exposure hole through which the insert part of the shock absorption member is exposed out of the second fastening member; and a removal prevention protrusion provided around an inner surface of the exposure hole such that the second flange is caught by the removal prevention protrusion.

The mounting means may include: a mounting bracket comprising a connection plate and coupling plates bent from respective opposite ends of the connection plate, each of the coupling plates having a rotating hole therein; a lubrication plate interposed between each of the coupling plates and the corresponding second fastening member; and a finish plate provided on an outer surface of each of the coupling plates.

The finish plate may have an annular guide protrusion on an inner surface thereof. The annular guide protrusion may be disposed in the rotating hole of the corresponding coupling plate.

A lighting apparatus, includes : a light source; a body receiving the light source therein; and a mounting means for fastening the body to an installation target, wherein the mounting means may include a connection plate and coupling plates bent from respective opposite ends of the connection plate, each of the coupling plates having a rotating hole therein. The light apparatus further include an angle indication means provided between the body and at least either of the coupling plates.

The angle indication means may include: a mounting plate disposed between the body and each of the coupling plates, the mounting plate having an annular depression therein; and an angle indication plate disposed in the annular depression of the mounting plate.

The mounting means may further include a finish plate provided on an outer surface of each of the coupling plate of the mounting bracket.

The finish plate may have an annular guide protrusion on an inner surface thereof. The annular guide protrusion may be disposed in the rotating hole of the corresponding coupling plate.

As described above, a lighting apparatus is installed on various kinds of equipment or vehicles such as SUVs for frequent rough road driving, vehicles for construction, mining equipment, heavy equipment or vehicles for construction, etc. so as to provide night lighting, and is provided with a shock absorption assembly to protect an LED, a circuit, software and hardware from vibrations generated under a variety of operating conditions. Furthermore, the shock absorption assembly includes a connector and a shock absorption member, and is mounted to the body of the apparatus by a fastening member (a second fastening member) in such a way that the body is fastened to an installation target by a mounting means connected to the connector. Thereby, the assembly process can be facilitated, the assembled state of the apparatus can be reliably maintained, the productivity can be improved, and maintenance and repair work can also be facilitated. Moreover, the connector, the shock absorption member and the second fastening member of the shock absorption assembly can be easily and reliably assembled with each other with specific orientation, and a light source can be easily adjusted in angle.

Further, the lighting apparatus further includes an angle indication means for facilitating the adjustment in angle of the light source and, particularly, is configured such that the angle-adjusted state can be reliably maintained despite severe vibration generated under a variety of operating conditions given the fact that the lighting apparatus is used for equipment or vehicles such as SUVs for frequent rough road driving, vehicles for construction, mining equipment, heavy equipment or vehicles for construction, etc., so as to provide night lighting.

### BRIEF DESCRIPTION OF THE DRAWINGS

The above and other objects, features and advantages of the present invention will be more clearly understood from the following detailed description taken in conjunction with the accompanying drawings, in which:
FIGS. 1A through 1D are assembled perspective views and a photograph illustrating a light apparatus having a shock absorption assembly, according to the present invention;
FIGS. 2 and 3 are exploded perspective views showing the light apparatus having the shock absorption assembly when viewed from different directions according to the present invention;
FIGS. 4A through 4C are assembled views and a photograph illustrating a light apparatus having an angle indication means, according to the present invention; and
FIGS. 5 and 6 are exploded perspective views showing the light apparatus having the angle indication means when viewed from different directions according to the present invention.

### DESCRIPTION OF THE PREFERRED EMBODIMENTS

Hereinafter, the present invention will be described in detail with reference to the attached drawings.

The same reference numerals throughout the drawings, that is, the same reference numerals for the second digit or the first digit, or for the second digit, the first digit and a letter of the alphabet, denote elements having the same function. If not specifically mentioned otherwise, the elements denoted by the reference numerals are to be assumed to comply with the above-mentioned reference scheme.

In the drawings, the thicknesses of lines or the sizes of elements may be exaggerated or simplified to more clearly and conveniently illustrate the present invention, but the bounds of the present invention must not be interpreted as being limited thereto.

The terminology used herein is for the purpose of describing particular embodiments only and is not intended to be limiting. As used herein, the singular forms "a," "an" and "the" are intended to include plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms including technical and scientific terms used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

The ordinal numerals "first", "second", "third", etc. are used only for the sake of description and they categorically do not impose a limit on the order of production.

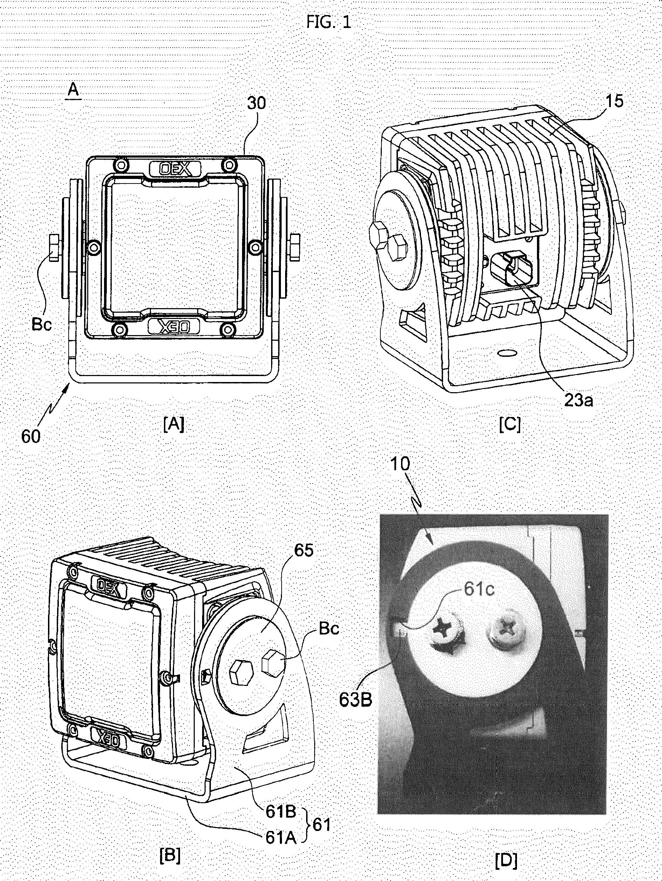

Before the description of a lighting apparatus A having a shock absorption assembly according to the present invention, the orientation will be approximately defined with reference to FIGS. 1A, 1B, 2, 4A and 4B for the sake of explanation.

Each drawing is divided into upper, lower, left, right, front and rear portions, and a side adjacent to a side cover Sc is designated as a first side or outer side. Based on this, the criteria of orientation will be used in the explanation of the embodiment of the present invention that is associated with other drawings and in the accompanying claims.

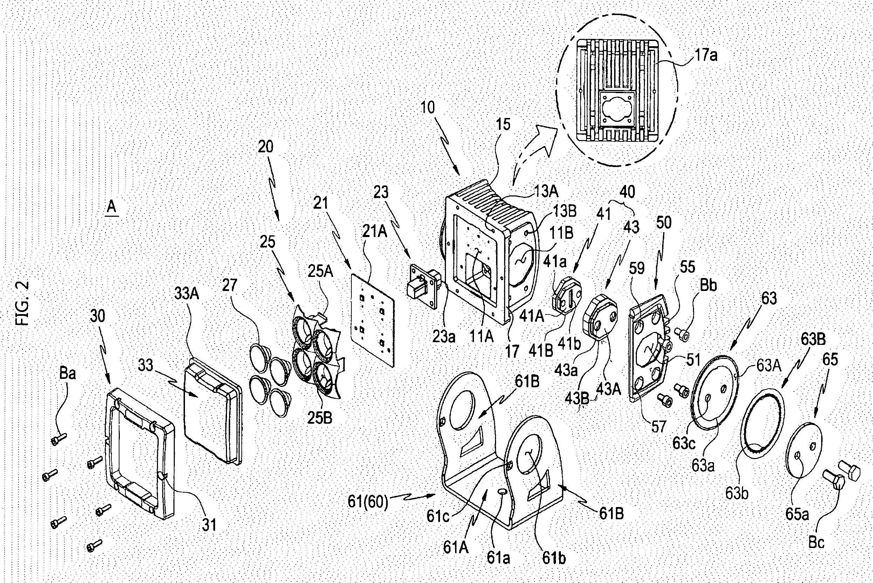

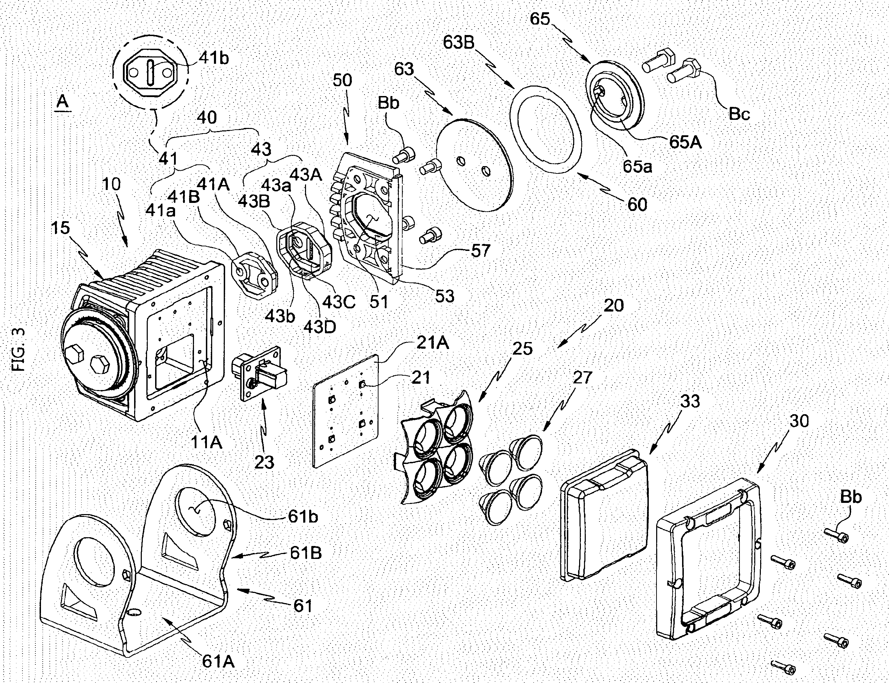

As shown in a front view of FIG. 1A, a front perspective view of FIG. 1B, a rear perspective view of FIG. 1C, a photograph of FIG. 1D and exploded perspective views of FIGS. 2 and 3 viewed from different directions, the lighting apparatus A provided with the shock absorption assembly according to the present invention includes a body 10, a light source unit 20 which is provided on a first mounting part 11A of the body 10, a mounting means 60 which fastens the body 10, in other words, the light apparatus, to an installation target (for example, a vehicle), and shock absorption assemblies 40 which are disposed between the body 10 and the mounting means 60 to absorb vibration or shock transmitted from the installation target.

As shown in FIGS. 2 and 3, the body 10 includes the first mounting part 11A, second mounting parts 11B, first and second coupling parts 13A and 13B, and a heat dissipation part 15 which has a plurality of heat dissipation fins on a rear surface thereof to increase a heat dissipation area.

The second mounting parts 11B are respectively provided on opposite ends of the body 10. Stop protrusions 17 are respectively provided on opposite ends of a front surface of the body 10 that correspond to the respective second mounting parts 11B. Each stop protrusion 17 functions to position a second fastening member 50 which fastens the corresponding shock absorption assembly 40 to the body 10, thus facilitating the assembly of the elements. A seating recess 17a (refer to a rear view of the body illustrated by the circle designated by the alternate long and short dash line of FIG. 2) is formed in a rear surface of each stop protrusion 17 so that a seating protrusion 57 of the corresponding second fastening member 50 is coupled into the seating recess 17a of the stop protrusion 17.

An LED 21 which has many advantages is preferably used in the light source unit 20. More preferably, a high luminance LED is used as the LED 21 so that the lighting apparatus of the present invention can be used as special night lighting and satisfy the needs of consumers. A PCB 21A to which a plurality of LEDs 21 are mounted is provided on the first mounting part 11A of the body 10. Particularly, an LED bracket 25 is preferably used to mount the PCB 21A to the first mounting part 11A.

A power block 23 provided with a control chip such as an SMPS has a socket 23a or a connector to which a power line is connected on a rear surface thereof. After the power block 23 has been connected to the PCB 21A, it is coupled to the LED bracket 25. Reflectors 27 for improving brightness and directivity characteristics are installed in respective mounting recesses 25b (in this embodiment, four mounting recesses 25b corresponding to the number of LEDs 21) of the LED bracket 25. Such an LED bracket assembly, that is, the light source unit 20, can be easily assembled in such a way that coupling hooks 25A of the LED bracket 25 are locked to respective coupling holes (not designated) of the body 10.

In this state, a window cover 33 covers the LEDs 21. A locking flange 33A of the window cover 33 is caught by a first fastening member 30. Bolts Ba are inserted into respective through holes 31 formed in four corners of the first fastening member 30. The bolts Ba are respectively threaded into the first coupling part 13A, in detail, internal threaded holes, which are formed in the perimeter of the first mounting part 11A. A waterproofing means such as a packing ring may be provided between the window cover 33 and the body 10.

The shock absorption assembly 40 which is provided in each of opposite ends of the body 10 includes a connector 41 and a shock absorption member 43.

With regard to angle adjustment characteristics of the lighting apparatus, it is preferable that not only the body 10 but also a lubrication plate 63, to which an angle indication plate 63B along with the mounting means 60 is coupled, are oriented in a specific direction.

For this, the connector 41 is made of a metal body (preferable, aluminum or an aluminum alloy to reduce weight) which can provide an internal threaded hole and be formed by a die casting method. Furthermore, the connector 41 has fastening holes 41a, in detail, two internal threaded holes. The positions, shapes and number of fastening holes 41a correspond to those of through holes 43a of the shock absorption member 43, through holes 63c of the lubrication plate 63 and through holes 65a of a finish plate.

The connector 41 has a first flange 41B which has a noncircular shape, particularly, a hexagonal shape, and is coupled into a hexagonal recess formed in the second mounting part 11B of the body 10.

Further, the connector 41 includes an exposure surface 41A which integrally protrudes from a portion defined inside the first flange 41B. The exposure surface 41A also has a noncircular shape (particularly, a hexagonal shape). A first female or male positioning member 41b (in this embodiment, a protrusion that is a male member) is provided on the hexagonal exposure surface. The positioning member 41b provides the orientation specificity of the shock absorption member 43 with respect to the connector 41.

To correspond to this, the shock absorption member 43 has a second female or male positioning member 43b (in this embodiment, a depression that is a female member).

The shock absorption member 43 of the shock absorption assembly is interposed between the connector 41 and the second fastening member 50.

In detail, as shown in FIG. 3, the shock absorption member 43 has first and second receiving depressions 43C and 43D which respectively correspond to the exposure surface 41A and the first flange 41B of the connector 41 so that the shock absorption member 43 can cover the connector 41.

The shock absorption member 43 includes a second flange 43B which has a noncircular shape, particularly, a hexagonal shape.' Further, the shock absorption member 43 includes an insert part 43A which protrudes from a portion defined inside the second flange 43B. The insert part 43A also has a noncircular shape, particularly, a hexagonal shape, to provide the specificity of orientation in coupling between the corresponding elements. Two through holes 43a are formed in the insert part 43A, and a second positioning member that corresponds to the first positioning member 41b is provided on a central portion of an inner surface of the insert part 43A, particularly, in the first receiving depression 43C.

The second fastening member 50 is assembled with the body 10 in such a way that bolts Bb are respectively threaded, via through holes 59 of the second fastening member 50, into internal threaded holes of the second coupling part 13B formed around the second mounting part 11B. A heat dissipation part 55 is provided on a rear surface of the second fastening member 50 to provide a sense of integration with the heat dissipation part 15 of the body 10 and the unity of the function.

Furthermore, the second fastening member 50 includes a seating protrusion 57 which is coupled into the seating recess 17a of the stop protrusion 17 of the body 10 to provide assembly convenience, the reliability of the assembled state, and the orientation specificity.

An exposure hole 51 is formed in a central portion of the second fastening member 50, and the insert part 43A of the shock absorption member 43 is disposed in the exposure hole 51 such that the insert part 43A is exposed to the outside of the second fastening member 50.

As shown in FIG. 3, a removal prevention protrusion 53 is provided around an inner surface of the exposure hole 51. The second flange 43B of the shock absorption member 43 is caught by the removal prevention protrusion 53.

In addition, the first flange 41B of the connector 41 is fitted into the second receiving depression 43D formed in the rear surface of the second flange 43B. Thereby, the assembled state of the shock absorption assembly 40 can be reliably maintained.

Furthermore, the through holes 43a of the insert part 43A of the shock absorption member 43 are exposed to the outside through the exposure hole 51 of the second fastening member 50, and the two fastening holes 41a of the connector 41 that are the internal threaded holes are also exposed to the outside through the exposure hole 51. Bolts Bc are threaded into the fastening holes 41a of the connector 41 through the through holes 65a of the finish plate 65, the through holes 63c of the lubrication plate 63 and the through holes 43a of the insert part 43A.

A corresponding one of coupling plates 61B of a mounting bracket 61 which is a part of the mounting means 60 is interposed between the lubrication plate 63 and the finish plate 65.

In this way, the body 10, the shock absorption assembly 40 and the mounting means 60 can be easily and reliably coupled to each other.

The mounting means 60 includes the mounting bracket 61 as a core element. The mounting bracket 61 includes a connection plate 61A and the coupling plates 61B which are bent from respective opposite ends of the connection plate 61A.

The connection plate 61A has an insert hole 61a through which the mounting bracket 61 is mounted to the installation target (for example: a vehicle) by a fastening means such as a mounting bolt or the like.

A rotating hole 61b is formed in each coupling plate 61B so that the angle of the body 10, in other words, the light source unit 20, with respect to the installation target can be adjusted. Particularly, the light source unit 20 is configured so as to be rotatable by 360°, given the relationship between the height of the connection plates 61A of the mounting bracket 61 and the height of the body 10.

Moreover, the mounting means 60 is configured such that the lubrication plate 63 is interposed between each coupling plate 61B of the mounting bracket 61 and the corresponding second fastening member 50. The lubrication plate 63 prevents a problem of the body 10 or the second fastening member 50 being damaged by friction between the body 10 or the second fastening member 50 and the coupling plate 61B of the mounting bracket 61. In particular, if the associated elements are made of aluminum or an aluminum alloy to reduce the weight of the apparatus, a problem of abrasion damage may be further increased. The structure of the mounting means 60 of the present invention can effectively mitigate this problem.

Furthermore, in this structure, when the bolts Bc are tightened to fix the light source unit 20 in one place after having been adjusted in angle, the bolts Bc are prevented from coming into direct contact with the body 10 (or the second fastening member 50). Therefore, even if the operation of adjusting the angle of the light source unit 20 is repeatedly conducted, the elements can be prevented from being damaged. When the angle adjustment operation is carried out after the bolts Bc have been slightly loosened, the light source unit 20 can be smoothly adjusted in angle with lubrication characteristics of the mounting means 60.

Such element protective characteristics and convenience and smoothness in adjustment of the angle of the light source unit 20 can be further enhanced by the finish plates 65 which are provided on the outer surfaces of the respective coupling plates 61B of the mounting bracket 61.

Meanwhile, the finish plate 65 has the through holes 65a so that it can be fastened to the connector 41 and the shock absorption member 43 of the shock absorption assembly 40 and the lubrication plate 63 by the bolts Bc. An annular guide protrusion 65A is provided on an inner surface of the finish plate 65. The annular guide protrusion 65A is inserted into the rotating hole 61b of the corresponding coupling plate 61B of the mounting bracket 61.

Therefore, even if the body 10 is not directly coupled to the center of the rotating holes 61b by a shaft coupling method, the body 10 can be smoothly rotated around the center of the rotating holes 61b.

Particularly, although the lighting apparatus of the present invention is heavier than a typical lighting apparatus to provide high brightness characteristics, a load such as centrifugal force generated by the rotation of the body 10 can be distributed by the annular guide protrusion 65A of the finish plate 65 which has a larger outer diameter than that of the case where the body 10 is connected to the mounting bracket by a center shaft pin. Thereby, the durability of the lighting apparatus of the present invention can be further enhanced.

An annular depression 63A is formed in the lubrication plate 63 around the through holes 63c, and two notches are formed in the annular depression 63A at diametrically opposite positions.

The angle indication plate 63B is installed in the annular depression 63A in such a way that protrusions 63b of the angle indication plate 63B are inserted into the respective notches 63a to orient the angle indication plate 63B in a certain direction.

The angle of the body 10, in other words, the light source unit 20, with respect to the mounting bracket 61 can be observed through an angle check hole 61c formed in each coupling plate 61B of the mounting bracket 61 (a pointed part is formed in the angle check hole 61c to more precisely check the angle of the body 10). This angle indication method is illustrated in the photograph of FIG. 1D showing the side view of the lighting apparatus.

Hereinafter, the lighting apparatus A according to the present invention will be explained with regard to the angle indication means.

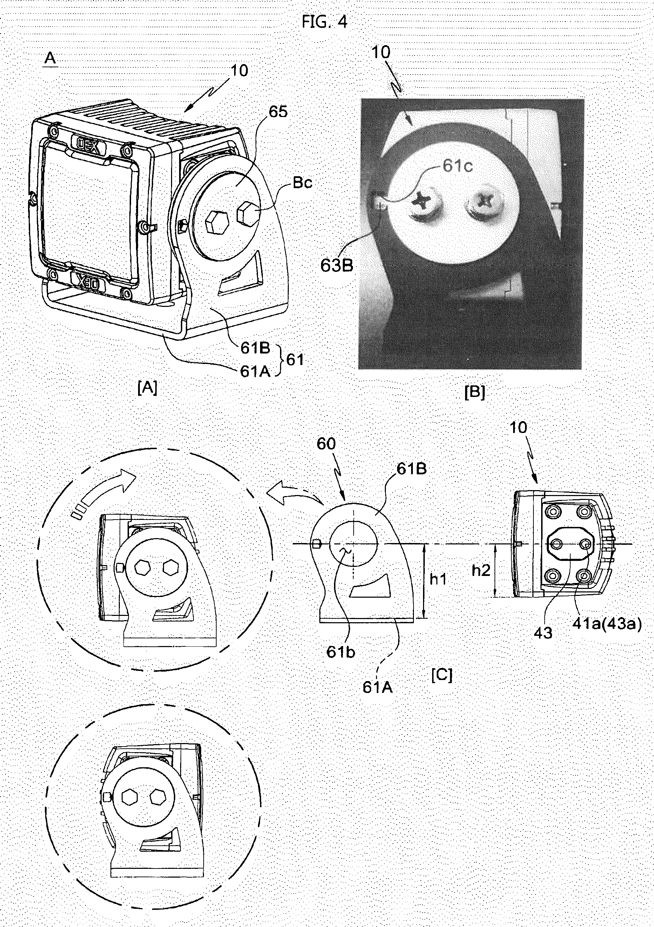

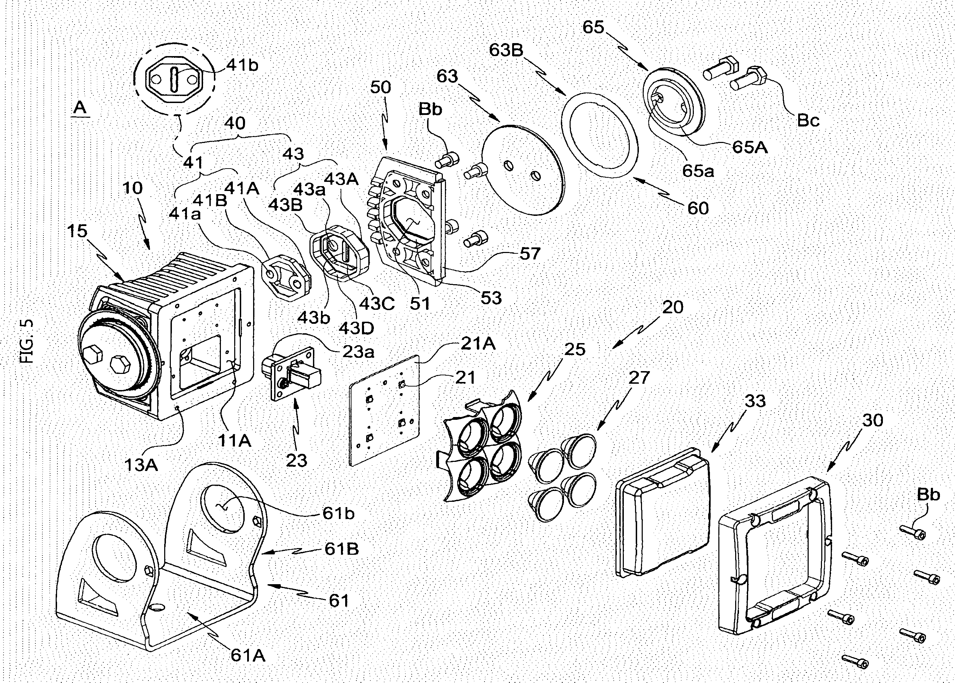

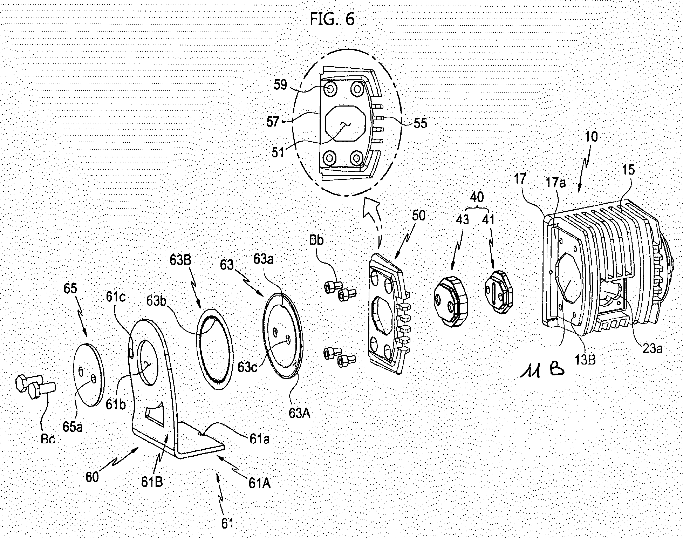

As shown in a perspective view of FIG. 4A, a photograph of FIG. 4B, views illustrating 360-degree rotation of the body 10 of FIG. 4C and exploded perspective views of FIGS. 5 and 6 viewed from different directions, the lighting apparatus A provided with the angle indication means according to the present invention includes a light source unit 20, a body 10 which receives the light source unit 20, a mounting means 60 which fastens the body 10, in other words, the light apparatus, to an installation target (for example, a vehicle), and an angle indication means which is disposed between the body 10 and the mounting means 60 to indicate the angle of the body 10, in other words, the light apparatus, with respect to the installation target.

As shown in FIGS. 5 and 6, the body 10 includes a first mounting part 11A, second mounting parts 11B, first and second coupling parts 13A and 13B, and a heat dissipation part 15 which has a plurality of heat dissipation fins on a rear surface thereof to increase a heat dissipation area.

The second mounting parts 11B are respectively provided on opposite ends of the body 10. The lighting apparatus A further includes a shock absorption assembly 40 which is provided on each second mounting part 11B to mitigate vibration or shock transmitted from the installation target (for example, a vehicle) to the light apparatus. Stop protrusions 17 are respectively provided on opposite ends of a front surface of the body 10 that correspond to the respective second mounting parts 11B. Each stop protrusion 17 functions to position a second fastening member 50 which fastens the corresponding shock absorption assembly 40 to the body 10, thus facilitating the assembly of the elements. A seating recess 17a (refer to a rear view of the body illustrated by the circle designated by the alternate long and short dash line of FIG. 5) is formed in a rear surface of each stop protrusion 17 so that a seating protrusion 57 of the corresponding second fastening member 50 is coupled into the seating recess 17a of the stop protrusion 17.

Meanwhile, the light source unit 20 which is installed in the body 10 preferably includes a PCB 21A to which a plurality of LEDs 21 are mounted to satisfy brightness conditions, rather than including only a single light source device, e.g., a single LED. Particularly, a high luminance LED is used as each LED 21 so that the lighting apparatus of the present invention can be used for special lighting and satisfy the needs of consumers. The PCB 21A is disposed on the first mounting part 11A of the body 10. Particularly, the light source unit assembly is configured such that an LED bracket 25 is preferably used to mount the PCB 21A to the first mounting part 11A.

A power block 23 provided with a control chip such as an SMPS has a socket 23a or a connector to which a power line is connected on a rear surface thereof. After the power block 23 has been connected to the PCB 21A, it is coupled to the LED bracket 25. Reflectors 27 for improving brightness and directivity characteristics are installed in respective mounting recesses 25b (in this embodiment, four mounting recesses 25b corresponding to the number of LEDs 21) of the LED bracket 25. Such an LED bracket assembly, that is, the light source unit 20, can be easily assembled in such a way that coupling hooks 25A of the LED bracket 25 are locked to respective coupling holes (not designated) of the body 10.

In this state, a window cover 33 covers the LEDs 21. A locking flange 33A of the window cover 33 is caught by a first fastening member 30. Bolts Ba are inserted into respective through holes 31 formed in four corners of the first fastening member 30. The bolts Ba are respectively threaded into the first coupling part 13A, in detail, internal threaded holes, which are formed in the perimeter of the first mounting part 11A. A waterproof means such as a packing ring may be provided between the window cover 33 and the body 10.

The mounting means 60 for mounting the body 10 to the installation target includes a mounting bracket 61 as a core element. The mounting bracket 61 includes a connection plate 61A and coupling plates 61B which are bent from respective opposite ends of the connection plate 61A.

The connection plate 61A has an insert hole 61a through which the mounting bracket 61 is mounted to the installation target (for example, a vehicle) by a fastening means such as a mounting bolt or the like.

A rotating hole 61b is formed in each coupling plate 61B so that the angle of the body 10, in other words, the light source unit 20, can be adjusted with respect to the installation target. Particularly, the light source unit 20 is configured so as to be rotatable by 360°, given the relationship between the height of the connection plates 61A of the mounting bracket 61 and the height of the body 10.

Moreover, the mounting means 60 is configured such that a lubrication plate 63 is interposed between each coupling plate 61B of the mounting bracket 61 and the corresponding second fastening member 50. The mounting plate 63 prevents a problem of the body 10 or the second fastening member 50 being damaged by friction between the body 10 or the second fastening member 50 and the coupling plate 61B of the mounting bracket 61. In particular, if the associated elements are made of aluminum or an aluminum alloy to reduce the weight of the apparatus, a problem of abrasion damage may be further increased. The structure of the mounting means 60 of the present invention can effectively mitigate this problem.

Furthermore, in this structure, when bolts Bc are tightened to fix the light source unit 20 in one place after having been adjusted in angle, the bolts Bc are prevented from coming into direct contact with the body 10 (or the second fastening member 50). Therefore, even if the operation of adjusting the angle of the light source unit 20 is repeatedly conducted, the elements can be prevented from being damaged. When the angle adjustment operation is carried out after the bolts Bc have been slightly loosened, the light source unit 20 can be smoothly adjusted in angle with lubrication characteristics of the mounting means 60.

Such element protective characteristics as well as convenience and smoothness in adjustment of the angle of the light source unit 20 can be further enhanced by the finish plates 65 which are provided on the outer surfaces of the respective coupling plates 61B of the mounting bracket 61.

Each finish plate 65 has through holes 65a so that it can be fastened by the bolts Bc both to a connector and a shock absorption member of the shock absorption assembly 40, which will be explained later herein, and to the lubrication plate 63 which forms the angle indication means along with an angle indication plate 63B. An annular guide protrusion 65A is provided on an inner surface of the finish plate 65. The annular guide protrusion 65A is inserted into the rotating hole 61b of the corresponding coupling plate 61B of the mounting bracket 61.

Therefore, even if the body 10 is not directly coupled to the center of the rotating holes 61b by a shaft coupling method, the body 10 can be smoothly rotated around the center of the rotating holes 61b.

Particularly, although the lighting apparatus of the present invention is heavier than a typical lighting apparatus to provide high brightness characteristics, a load such as centrifugal force generated by the rotation of the body 10 can be distributed by the annular guide protrusion 65A of the finish plate 65 which has a larger outer diameter than that of the case where the body 10 is connected to the mounting bracket by a center shaft pin. Thereby, the durability of the lighting apparatus of the present invention can be further enhanced.

In addition, the lubrication plate 63 that forms the angle indication means has an annular depression 63A around the through holes 63c thereof. Two notches are formed in the annular depression 63A at diametrically opposite positions.

The angle indication plate 63B is installed in the annular depression 63A in such a way that protrusions 63b of the angle indication plate 63B are inserted into the respective notches 63a to orient the angle indication plate 63B in a certain direction.

The angle of the body 10, in other words, the light source unit 20, with respect to the mounting bracket 61 can be observed through an angle check hole 61c formed in each coupling plate 61B of the mounting bracket 61 (a pointed part is formed in the angle check hole 61c to more precisely check the angle of the body 10). This angle indication method is illustrated in the photograph of FIG. 4B showing the side view of the lighting apparatus.

Meanwhile, the shock absorption assembly 40 not only has its intended function but also has a function of protecting the angle adjustment means from vibrations such that the angle adjusted state can be maintained even when vibration or shock is applied to the angle adjustment means.

In addition, using characteristic elasticity of the shock absorption member, the shock absorption assembly 40 provides a function of preventing the bolts from being loosened from the internal threaded holes like as if a spring washer is used between a nut and a bolt.

Moreover, the mounting means further include the finish plates 65 which connect the body 10 of the lighting apparatus to the installation target (for example, a vehicle) and facilitate the coupling and assembly among the connectors 41, the shock absorption members and the second fastening members of the shock absorption assemblies. Each coupling plate 61B of the mounting bracket 61 of the mounting means which fastens the body 10 to the installation target is interposed between the corresponding finish plate 65 and the corresponding lubrication plate 63 which forms a part of the angle indication means, whereby the coupling force between the elements can be markedly enhanced. Eventually, the angle at which the light source unit emits light can be easily controlled in response to various conditions, and the angle-adjusted state can be reliably maintained. Moreover, the light source unit can be rotated by 360°, thus enhancing the adaptability to circumstances, and satisfying needs of consumers.

In detail, each finish plate 65 is reliably coupled to the corresponding coupling plate 61B of the mounting bracket 61 in such a way that the annular guide protrusion 65A of the finish plate 65 is disposed in the rotating hole 61b formed in the coupling plate 61B. The bolts Bc which are inserted into the corresponding through holes 65a of the finish plate 65 are threaded into the corresponding fastening holes 41a (threaded holes) of the connector 41 of the shock absorption assembly 40 after successively passing through the through holes 63c of the lubrication plate 63 and the through holes 43a of the shock absorption member 43.

Furthermore, the shock absorption assembly 40 is reliably coupled to the second mounting part 11B of the body 10 by the second fastening member 50.

Thereby, after the mounting bracket 61 of the mounting means 60 has been fastened to the installation target, rotation of the body 10, in other words, rotation of the light source unit 20, results in rotation of the lubrication plate 63 of the angle indication means.

Here, when the angle indication plate 63B which is locked to the annular depression 63A of the lubrication plate 63 is rotated, the connection between the notches 63a and the protrusion 63b prevents the angle indication plate 63B from otating with respect to the lubrication plate 63.

The angle of the body 10 or the light source unit 20 with respect to the installation target can be checked in such a way that graduations on the angle indication plate 63B are observed through the angle check hole 61c of the coupling plate 61B of the mounting bracket 61. This is illustrated in the photograph of FIG. 4B showing the side view of the lighting apparatus.

As shown in views of FIG. 4C illustrating the 360-degree rotation of the body 10, the body 10, in other words, the light source unit 20, can be rotated by 360°, given the relationship between the height of the connection plates 61A of the mounting bracket 61 and the height of the body 10.

In more detail, a height h1 from an upper surface of the connection plate 61A of the mounting bracket 61 to the center of the rotating hole 61b of the coupling plate 61B is greater than a half of the maximum height of the body 10, that is, than a height h2 from a lower end of the body lo to a line connecting the through holes 43a of the shock absorption member 43 or the fastening holes 41a of the connector 41 of the shock absorption assembly 40 coupled to the first mounting part 11A of the body 10 (the line corresponds to the rotating axis of the body 10 or the center axis of the rotating hole 61b of the mounting bracket 61 to which the body 10 is mounted and is arranged at a position corresponding to the half of the height of the body 10). Therefore, the light source unit 20, in other words, the body 10, can be rotated by 360°. The upper and lower circles designated by the alternate long and short dash lines at the left portion of FIG. 4C show the operation of rotating the body 10 by 180°.

Below, the shock absorption assembly 40 will be explained in more detail.

The shock absorption assembly 40 which is coupled to the second mounting part 11B provided on each of the opposite ends of the body 10, the connector 41 and the shock absorption member 43 which are assembled with each other.

With regard to the angle adjustment characteristics of the lighting apparatus, it is preferable that not only the body 10 but also the lubrication plate 63, to which the angle indication plate 63B along with the mounting means 60 is coupled, are oriented in a specific direction.

For this, the connector 41 is made of a metal body (preferable, aluminum or an aluminum alloy to reduce the weight) which can provide an internal threaded hole and be formed by a die casting method. Furthermore, the connector 41 has the fastening holes 41a, in detail, two internal threaded holes. The positions, shapes and number of fastening holes 41a correspond to those of the through holes 43a of the shock absorption member 43, the through holes 63c of the lubrication plate 63 and the through holes 65a of the finish plate 65.

The connector 41 has a first flange 41B which has a noncircular shape, particularly, a hexagonal shape, and is coupled into a hexagonal recess formed in the second mounting part 11B of the body 10.

Further, the connector 41 includes an exposure surface 41A which integrally protrudes from a portion defined inside the first flange 41B. The exposure surface 41A also has a noncircular shape (particularly, a hexagonal shape). A first female or male positioning member 41b (in this embodiment, a protrusion that is a male member) is provided on the hexagonal exposure surface. The positioning member 41b provides the orientation specificity of the shock absorption member 43 with respect to the connector 41.

To correspond to this, the shock absorption member 43 has a second female or male positioning member 43b (in this embodiment, a depression that is a female member).

The shock absorption member 43 of the shock absorption assembly is interposed between the connector 41 and the second fastening member 50.

In detail, as shown in FIG. 6, the shock absorption member 43 has first and second receiving depressions 43C and 43D which respectively correspond to the exposure surface 41A and the first flange 41B of the connector 41 so that the shock absorption member 43 can cover the connector 41.

The shock absorption member 43 includes a second flange 43B which has a noncircular shape, particularly, a hexagonal shape. Further, the shock absorption member 43 includes an insert part 43A which protrudes from a portion defined inside the second flange 43B. The insert part 43A also has a noncircular shape, particularly, a hexagonal shape, to provide the specificity of orientation in coupling between the corresponding elements. The two through holes 43a are formed in the insert part 43A, and a second positioning member that corresponds to the first positioning member 41b is provided on a central portion of an inner surface of the insert part 43A, particularly, in the first receiving depression 43C.

The second fastening member 50 is assembled with the body 10 in such a way that bolts Bb are respectively threaded, via through holes 59 of the second fastening member 50, into internal threaded holes of the second coupling part 13B formed around the second mounting part 11B. A heat dissipation part 55 is provided on a rear surface of the second fastening member 50 to provide a sense of integration with the heat dissipation part 15 of the body 10 and the unity of the function.

Furthermore, the second fastening member 50 includes a seating protrusion 57 which is coupled into the seating recess 17a of the stop protrusion 17 of the body 10 to provide assembly convenience, the reliability of the assembled state and the orientation specificity.

An exposure hole 51 is formed in a central portion of the second fastening member 50, and the insert part 43A of the shock absorption member 43 is disposed in the exposure hole 51 such that the insert part 43A is exposed to the outside of the second fastening member 50.

As shown in FIG. 6, a removal prevention protrusion 53 is provided around an inner surface of the exposure hole 51. The second flange 43B of the shock absorption member 43 is caught by the removal prevention protrusion 53.

In addition, the first flange 41B of the connector 41 is fitted into the second receiving depression 43D formed in the rear surface of the second flange 43B. Thereby, the assembled state of the shock absorption assembly 40 can be reliably maintained.

Furthermore, the through holes 43a of the insert part 43A of the shock absorption member 43 are exposed to the outside through the exposure hole 51 of the second fastening member 50, and the two fastening holes 41a of the connector 41 that are the internal threaded holes are also exposed to the outside through the exposure hole 51. Bolts Bc are threaded into the fastening holes 41a of the connector 41 through the through holes 65a of the finish plate 65, the through holes 63c of the lubrication plate 63 and the through holes 43a of the insert part 43A.

A corresponding one of coupling plates 61B of a mounting bracket 61 which is a part of the mounting means 60 is interposed between the lubrication plate 63 and the finish plate 65.

In this way, the body 10, the shock absorption assembly 40 and the mounting means 60 can be easily and reliably coupled to each other.

In the above-mentioned description, although well known techniques which are associated with specifications and brightness characteristics of the LEDs, the size and weight of the body, materials of the elements have been omitted, those skilled in the art will be able to easily deduce and embody them.

While the preferred embodiments of the lighting apparatus having the shock absorption assembly according to the present invention have been disclosed for illustrative purposes, those skilled in the art will appreciate that various modifications, additions and substitutions are possible, without departing from the scope of the invention as disclosed in the accompanying claims.

## Claims

1. A lighting apparatus (A), comprising:
a body (10) having a first mounting part (11A), second mounting parts (11B), a first coupling part (13A) and second coupling parts (13B);
a light source unit (20) provided on the first mounting part (11A) of the body (10);
a shock absorption assembly (40) disposed on each of the second mounting parts (11B) provided on respective opposite ends of the body (10);
a first fastening member coupled to the first coupling part (13A) of the body (10) to fasten the light source unit (20) to the body (10);
a second fastening member (50) coupled to each of the second coupling part (13B) of the body (10) to fasten the corresponding shock absorption assembly (40) to the body (10); and
mounting means (60) provided or the second mounting parts (11B) for fastening the body (10) to an installation target,
wherein the shock absorption assembly (40) comprises:
a connector (41) having a fastening part (41a); and
a shock absorption member (43) interposed between the connector (41) and the second fastening member (50),
wherein, in the shock absorption assembly (40) the connector (41) has a first flange (41B) for removal prevention, the first flange (41B) being provided around the fastening part (41a), and the shock absorption member (43) comprises:
an insert part (43A) covering an exposure surface of the connector (41) and having a through hole (43a) corresponding to the fastening part (41a) of the connector (41); and
a second flange (43B) provided around the insert part (43A), a second receiving depression (43D) receiving the first flange (41B) therein, and
wherein the second fastening member (50) has:
an exposure hole (51) through which the insert part (43A) of the shock absorption member (43) is exposed out of the second fastening member (50); and
a removal prevention protrusion (53) provided around an inner surface of the exposure hole (51) such that the second flange (43B) is caught by the removal prevention protrusion (53),
wherein a first female or male positioning member (41b) is provided on an exposure surface (41A) in an area inside the first flange (41B) of the connector (41),
the shock absorption member (43) comprises a second female or male positioning member (43b) coupled to the first female or male positioning member (41b), and
the body (10) comprises:
a heat dissipation part (15) including a plurality of heat dissipation fins so that a heat dissipation area of a rear surface of the body (10) is increased,
wherein stop protrusions (17) are respectively provided on opposite ends of a front surface of the second mounting parts (11B) of the body (10), with a seating recess (17a) formed in a rear surface of each of the stop protrusions (17), and
the second fastening member (50) comprises a seating protrusion (57) coupled to the corresponding seating recess (17a).

2. The lighting apparatus (A) as set forth in claim 1, wherein the mounting means (60) comprises:
a mounting bracket (61) comprising a connection plate (61A) and coupling plates (61B) bent from respective opposite ends of the connection plate (61A), each of the coupling plates (61B) having a rotating hole (61b) therein;
a lubrication plate (63) interposed between each of the coupling plates (61B) and the corresponding second fastening member (50); and
a finish plate (65) provided on an outer surface of each of the coupling plates (61B).

3. The lighting apparatus (A) as set forth in claim 2, wherein the finish plate (65) has an annular guide protrusion (65A) on an inner surface thereof, the annular guide protrusion (65A) being disposed in the rotating hole (61b) of the corresponding coupling plate (61B).

4. The lighting apparatus (A) as set forth in claim 1, wherein the mounting means (60) comprises a connection plate (61A) and coupling plates (61B) bent from respective opposite ends of the connection plate (61A), each of the coupling plates (61B) having a rotating hole (61b) therein,
the light apparatus (A) further comprising angle indication means provided between the body (10) and at least either of the coupling plates (61B).

5. The lighting apparatus (A) as set forth in claim 4, wherein the angle indication means comprises:
a lubrication plate (63) disposed between the body (10) and each of the coupling plates (61B), the lubrication plate (63) having an annular depression (63A) therein; and
an angle indication plate (63B) disposed in the annular depression (63A) of the mounting plate (63).

6. The lighting apparatus (A) as set forth in claim 4 or 5, wherein the mounting means (60) further comprise a finish plate (65) provided on an outer surface of each of the coupling plate (61B) of the mounting bracket (61).

7. The lighting apparatus (A) as set forth in claim 6, wherein the finish plate (65) has an annular guide protrusion (65A) on an inner surface thereof, the annular guide protrusion (65A) being disposed in the rotating hole (61b) of the corresponding coupling plate (61B).

## Patentansprüche

1. Beleuchtungsvorrichtung (A), die Folgendes umfasst:
einen Körper (10) mit einem ersten Befestigungsteil (11A), zwei zweiten Befestigungsteilen (11B), einem ersten Kopplungsteil (13A) und zwei zweiten Kopplungsteilen (13B);
eine Lichtquelleneinheit (20), die auf dem ersten Befestigungsteil (11A) des Körpers (10) vorgesehen ist;
eine Stoßabsorptionsanordnung (40), die auf jedem der zweiten Befestigungsteile (11B), die an jeweiligen gegenüberliegenden Enden des Körpers (10) vorgesehen sind, angeordnet ist;
ein erstes Befestigungselement, das mit dem ersten Kopplungsteil (13A) des Körpers (10) gekoppelt ist, um die Lichtquelleneinheit (20) an dem Körper (10) zu befestigen;
ein zweites Befestigungselement (50), das mit jedem der zweiten Kopplungsteile (13B) des Körpers (10) gekoppelt ist, um die entsprechende Stoßabsorptionsanordnung (40) an dem Körper (10) zu befestigen; und
Befestigungsmittel (60), die auf den zweiten Befestigungsteilen (11B) vorgesehen sind, um den Körper (10) an einem Installationsziel zu befestigen,
wobei die Stoßabsorptionsanordnung (40) umfasst:
ein Verbindungselement (41) mit einem Befestigungsteil (41a); und
ein Stoßabsorptionselement (43), das zwischen das Verbindungselement (41) und das zweite Befestigungselement (50) eingefügt ist,
wobei in der Stoßabsorptionsanordnung (40) das Verbindungselement (41) einen ersten Flansch (41B) für einen Entfernungsschutz besitzt, wobei der erste Flansch (41B) um den Befestigungsteil (41a) vorgesehen ist und das Stoßabsorptionselement (43) umfasst:
einen Einfügeabschnitt (43A), der eine freiliegende Fläche des Verbindungselements (41) bedeckt und ein Durchgangsloch (43a) besitzt, das dem Befestigungsteil (41a) des Verbindungselements (41) entspricht; und
einen zweiten Flansch (43B), der um den Einfügeabschnitt (43A) vorgesehen ist, wobei eine zweite Empfangsvertiefung (43D) den ersten Flansch (41) in ihr aufnimmt, und
wobei das zweite Befestigungselement (50) besitzt:
ein freiliegendes Loch (51), durch das der Einfügeabschnitt (43A) des Stoßabsorptionselements (43) aus dem zweiten Befestigungselement (50) freiliegt; und
einen Entfernungsschutzvorsprung (53), der um eine innere Fläche des freiliegenden Lochs (51) derart vorgesehen ist, dass der zweite Flansch (43B) durch den Entfernungsschutzvorsprung (53) erfasst wird,
wobei ein erstes Buchsen- oder Zapfenpositionierungselement (41) auf einer freiliegenden Fläche (41A) in einem Bereich innerhalb des ersten Flansches (41B) des Verbindungselements (41) vorgesehen ist,
wobei das Stoßabsorptionselement (43) ein zweites Buchsen- oder Zapfenpositionierungselement (43b) umfasst, das an das erste Buchsen- oder Zapfenpositionierungselement (41b) gekoppelt ist, und
der Körper (10) umfasst:
einen Wärmeabführungsteil (15), der mehrere Wärmeabführungsfinnen enthält, so dass ein Wärmeabführungsbereich einer hinteren Fläche des Körpers (10) erhöht ist,
wobei Anschlagvorsprünge (17) jeweils auf gegenüberliegenden Enden einer vorderen Fläche der zweiten Befestigungsteile (11B) des Körpers (10) vorgesehen sind und eine Sitzaussparung (17a) in einer hinteren Fläche jedes der Anschlagvorsprünge (17) gebildet ist und
das zweite Befestigungselement (50) einen Sitzvorsprung (57) umfasst, der an die entsprechende Sitzaussparung (17a) gekoppelt ist.

2. Beleuchtungsvorrichtung (A) nach Anspruch 1, wobei die Befestigungsmittel (60) Folgendes umfassen:
eine Befestigungsklammer (61), die eine Verbindungsplatte (61A) und Kopplungsplatten (61B), die von jeweiligen gegenüberliegenden Enden der Verbindungsplatte (61A) abgewinkelt sind, umfasst, wobei in jeder der Kopplungsplatten (61B) ein Rotationsloch (61b) vorhanden ist;
eine Schmierplatte (63), die zwischen jede der Kopplungsplatten (61B) und das entsprechende zweite Befestigungselement (50) eingefügt ist; und
eine Abschlussplatte (65), die auf einer äußeren Fläche jeder der Kopplungsplatten (61B) vorgesehen ist.

3. Beleuchtungsvorrichtung (A) nach Anspruch 2, wobei die Abschlussplatte (65) auf ihrer inneren Fläche einen kreisförmigen Führungsvorsprung (65A) besitzt, wobei der kreisförmige Führungsvorsprung (65A) in dem Rotationsloch (61b) der entsprechenden Kopplungsplatte (61B) angeordnet ist.

4. Beleuchtungsvorrichtung (A) nach Anspruch 1, wobei die Befestigungsmittel (60) eine Verbindungsplatte (61A) und Kopplungsplatten (61B), die von jeweiligen gegenüberliegenden Enden der Verbindungsplatte (61A) abgewinkelt sind, umfassen, wobei in jeder der Kopplungsplatten (61B) ein Rotationsloch (61b) vorhanden ist,
wobei die Lichtvorrichtung (A) ferner Winkelangabemittel umfasst, die zwischen dem Körper (10) und mindestens einer der Kopplungsplatten (61B) vorgesehen sind.

5. Beleuchtungsvorrichtung (A) nach Anspruch 4, wobei die Winkelangabemittel umfassen:
eine Schmierplatte (63), die zwischen dem Körper (10) und jeder der Kopplungsplatten (61B) angeordnet ist, wobei in der Schmierplatte (63) eine ringförmige Vertiefung (63A) vorhanden ist; und
eine Winkelangabeplatte (63B), die in der ringförmigen Vertiefung (63A) der Befestigungsplatte (63) angeordnet ist.

6. Beleuchtungsvorrichtung (A) nach Anspruch 4 oder 5, wobei die Befestigungsmittel (60) ferner eine Abschlussplatte (65) umfassen, die auf einer äußeren Fläche jeder der Kopplungsplatten (61B) der Befestigungsklammer (61) vorgesehen ist.

7. Beleuchtungsvorrichtung (A) nach Anspruch 6, wobei die Abschlussplatte (65) einen ringförmigen Führungsvorsprung (65A) auf ihrer inneren Fläche besitzt, wobei der ringförmige Führungsvorsprung (65A) in dem Rotationsloch (61b) der entsprechenden Kopplungsplatte (61B) vorgesehen ist.

## Revendications

1. Appareil d'éclairage (A) comprenant :
un corps (10) ayant une première partie de montage (11A), 2 deuxièmes parties de montage (11B), une première partie de couplage (13A) et 2 deuxièmes parties de couplage (13B) ;
une unité de source de lumière (20) prévue sur la première partie de montage (11A) du corps (10) ;
un ensemble d'absorption de choc (40) disposé sur chacune des deuxièmes parties de montage (11B) prévues sur des extrémités opposées respectives du corps (10) ;
un deuxième élément de fixation couplé à la deuxième partie de couplage (13A) du corps (10) pour fixer l'unité de source de lumière (20) sur le corps (10) ;
un second élément de fixation (50) couplé à chaque seconde partie de couplage (13B) du corps (10) pour fixer l'ensemble d'absorption de choc (40) correspondant sur le corps (10) ; et
des moyens de montage (60) prévus sur les deuxièmes parties de montage (11B) pour fixer le corps (10) sur une cible d'installation,
dans lequel l'ensemble d'absorption de choc (40) comprend :
un connecteur (41) ayant une partie de fixation (41a) ; et
un élément d'absorption de choc (43) intercalé entre le connecteur (41) et le deuxième élément de fixation (50),
dans lequel, dans l'ensemble d'absorption de choc (40), le connecteur (41) a une première bride (41B) pour la prévention du retrait, la première bride (41B) étant prévue autour de la partie de fixation (41a), et l'élément d'absorption de choc (43) comprend :
une partie d'insert (43A) recouvrant une surface d'exposition du connecteur (41) et ayant un trou débouchant (43a) correspondant à la partie de fixation (41a) du connecteur (41) ; et
une deuxième bride (43B) prévue autour de la partie d'insert (43A), une deuxième dépression de réception (43D) recevant la première bride (41B) à l'intérieur de cette dernière, et
dans lequel le deuxièmes élément de fixation (50) a :
un trou d'exposition (51) à travers lequel la partie d'insert (43A) de l'élément d'absorption de choc (43) est exposé hors du deuxième élément de fixation (50) ; et
une saillie de prévention de retrait (53) prévue autour d'une surface interne du trou d'exposition (51) de sorte que la deuxième bride (43B) est saisie par la saillie de prévention de retrait (53),
dans lequel un premier élément de positionnement femelle ou mâle (41b) est prévu sur une surface d'exposition (41A) dans une zone à l'intérieur de la première bride (41B) du connecteur (41),
l'élément d'absorption de choc (43) comprend un deuxième élément de positionnement femelle ou mâle (43b) couplé au premier élément de positionnement femelle ou mâle (41b), et
le corps (10) comprend :
une partie de dissipation de chaleur (15) comprenant une pluralité d'ailettes de dissipation de chaleur de sorte qu'une zone de dissipation de chaleur d'une surface arrière du corps (10) est augmentée,
dans lequel des saillies de butée (17) sont respectivement prévus sur des extrémités opposées d'une surface des deuxièmes parties de montage (11b) du corps (10) avec un évidement d'assise (17a) formé dans une surface arrière de chacune des saillies de butée (17), et
le deuxième élément de fixation (50) comprend une saillie d'assise (57) couplée à l'évidement d'assise (17a) correspondant.

2. Appareil d'éclairage (A) selon la revendication 1, dans lequel le moyen de montage (60) comprend :
une console de montage (61) comprenant une plaque de raccordement (61A) et des plaques de couplage (61B) pliées à partir des extrémités opposées de la plaque de raccordement (61A), chacune des plaques de couplage (61B) ayant un trou de rotation (61b) à l'intérieur de ces dernières ;
une plaque de lubrification (63) intercalée entre chacune des plaques de couplage (61B) et le deuxième élément de fixation (50) correspondant ; et
une plaque de finition (65) prévue sur une surface externe de chacune des plaques de couplage (61B).

3. Appareil d'éclairage (A) selon la revendication 2, dans lequel la plaque de finition (65) a une saillie de guidage annulaire (65A) sur sa surface interne, la saillie de guidage annulaire (65A) étant disposée dans le trou de rotation (61b) de la plaque de couplage (61B) correspondante.

4. Appareil d'éclairage (A) selon la revendication 1, dans lequel le moyen de montage (60) comprend une plaque de raccordement (61A) et des plaques de couplage (61B) pliées à partir des extrémités opposées respectives de la plaque de raccordement (61A), chacune des plaques de couplage (61B) ayant un trou de rotation (61b) à l'intérieur de cette dernière,
l'appareil d'éclairage (A) comprenant, en outre, un moyen d'indication d'angle prévu entre le corps (10) et au moins chacune des plaques de couplage (61B).

5. Appareil d'éclairage (A) selon la revendication 4, dans lequel le moyen d'indication d'angle comprend :
une plaque de lubrification (63) disposée entre le corps (10) et chacune des plaques de couplage (61B), la plaque de lubrification (63) ayant une dépression annulaire (63A) à l'intérieur de cette dernière ; et
une plaque d'indication d'angle (63B) disposée dans la dépression annulaire (63A) de la plaque de montage (63).

6. Appareil d'éclairage (A) selon la revendication 4 ou 5, dans lequel les moyens de montage (60) comprennent, en outre, une plaque de finition (65) prévue sur une surface externe de chacune des plaques de couplage (61B) de la console de montage (61).

7. Appareil d'éclairage (A) selon la revendication 6, dans lequel la plaque de finition (65) a une saillie de guidage annulaire (65A) sur sa surface interne, la saillie de guidage annulaire (65A) étant disposée dans le trou de rotation (61b) de la plaque de couplage (61B) correspondante.
